# EUROPÄISCHE PATENTSCHRIFT

(11) **EP 2 935 437 B1**
(45) Veröffentlichungstag und Bekanntmachung des Hinweises auf die Patenterteilung: **02.07.2025**
(21) Anmeldenummer: 13811194.3
(22) Anmeldetag: 18.12.2013
(51) Int. Cl.: C08K 5/00, C08K 5/521

(54) **ORGANISCHE FARBMITTEL UND EINGEFÄRBTE POLYMER-ZUSAMMENSETZUNGEN MIT GUTEN VERARBEITUNGSEIGENSCHAFTEN**
ORGANIC COLORANTS AND COLOURED POLYMER COMPOSITIONS HAVING GOOD PROCESSING PROPERTIES
COLORANT ORGANIQUE ET COMPOSITIONS POLYMÈRES TEINTÉES AVEC DE BONNES PROPRIÉTÉS DE TRAITEMENT

(30) Priorität: 20.12.2012 EP 12198354
(43) Veröffentlichungstag der Anmeldung: 28.10.2015
(73) Patentinhaber: Covestro Deutschland AG, 51373 Leverkusen (DE)
(72) Erfinder: MEYER, Alexander, 40489 Düsseldorf (DE); REICHENAUER, Joerg, 47802 Krefeld (DE)
(74) Vertreter: Levpat
(86) Internationale Anmeldenummer: PCT/EP2013/077043
(87) Internationale Veröffentlichungsnummer: WO 2014/095967

(56) Entgegenhaltungen:
- EP-A1- 1 857 424
- WO-A1-2011/038842
- US-A1- 2012 157 587
- DATABASE WPI Week 200921, Derwent World Patents Index; AN 2009-F09523, XP002694364
- DATABASE WPI Week 197804, Derwent World Patents Index; AN 1978-07281A, XP002694365

## Beschreibung

Die vorliegende Erfindung betrifft eingefärbte Formmassen auf Basis von Polycarbonat Insbesondere betrifft die vorliegende Erfindung Polycarbonatzusammensetzungen enthaltend spezielle organische Farbmittel mit hoher Farbstabilität gegen Bewitterung unter Verwendung spezieller Stabilisatoren auf Phosphatbasis.

Die Erfindung betrifft ferner eine Polymer-Zusammensetzung enthaltend mindestens einen thermoplastischen Kunststoff, mindestens ein organisches Farbmittel, bevorzugt eine Kombination von mindestens zwei organischen Farbmitteln spezieller Struktur, sowie mindestens einem Stabilisator auf Phosphatbasis.

Die Erfindung betrifft ferner die Verwendung der erfindungsgemäßen Farbmittel/Stabilisatorkombination zur Einfärbung von Polymer-Zusammensetzungen insbesondere für transparente Einstellungen, wie sie zur Herstellung von Scheiben für den Einsatz in Gebäuden, Kraftfahrzeugen und Schienen- oder Luftfahrzeugen benötigt werden.

In einer alternativen Ausführungsform betrifft die Erfindung gedeckt-eingefärbte Formkörper.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen. Transparente thermoplastischen Polymere beziehungsweise die thermoplastischen Polymer-Zusammensetzungen im Sinne der vorliegenden Erfindung weisen ferner eine Anfangstrübung von weniger als 5,0 %, bevorzugt 4,0 %, weiter bevorzugt weniger als 3,0 %, insbesondere bevorzugt weniger als 2,0 % auf. Im Rahmen der vorliegenden Erfindung wird die Trübung, sofern nicht anders angegeben, nach ASTM D 1003 mit einem BYK Gardner Haze Gard bestimmt.

Unter gedeckt eingefärbt versteht man im Sinne der vorliegenden Erfindung Materialien, die die oben geschilderten Bedingungen für Transparenz nicht erfüllen. Insbesondere sind hiermit Formmassen gemeint, die eine Lichttransmission von weniger als 1 %, bzw. einen L* von größer 15 aufweisen.

Darüber hinaus betrifft die vorliegende Erfindung ein Verfahren zur Herstellung von thermoplastischen Polymer-Zusammensetzungen enthaltend die erfindungsgemäße Farbmittel-Stabilisatorkombination.

Gegenstand der vorliegenden Erfindung sind zudem die aus den erfindungsgemäß eingefärbten thermoplastischen Polymer-Zusammensetzungen hergestellten Erzeugnisse Formkörper beziehungsweise geformten Gegenstände.

Die Einfärbung von Kunststoffen an sich ist bekannt. Dennoch fehlte es bislang an Farbmittelkombinationen insbesondere für transparente Einstellungen, die über eine ausgezeichnete Bewitterungsstabilität für Anwendungen mit hohen optischen Anforderungen bei gleichzeitig guter Verarbeitungsstabilität verfügen. Zu Anwendungen mit entsprechen hohen Anforderungen an die verwendeten Farbmittelkombinationen zählen unter anderem transparente Fertigteile für Automobilverscheibungen, die je nach Anwendung in unterschiedlicher Ausprägung eingefärbt werden können. Aufgrund der hohen Lebensdauer von Kraftfahrzeugen kommt es dabei, insbesondere im Bereich hochpreisiger Automobile, darauf an, daß der gewünschte qualitativ hochwertige Farbeindruck des Materials über den Zeitraum der Nutzungsdauer ohne nennenswerte Einbußen erhalten bleibt.

Aufgrund der genannten Anforderungen ist die Anzahl von geeigneten bewitterungsstabilen Farbmitteln begrenzt.

Aufgrund der hohen geforderten Lebensdauer wird als Verscheibungsmaterial häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente anorganische Oxide, wie z.B. Eisenoxid, eingesetzt werden, verändern sich die Farbeigenschaften praktisch nicht. Die Verwendung dieser Pigmente in thermoplastischen Materialien ist allerdings nicht möglich, da sie zu Trübung und/oder Abbau der entsprechenden Matrix führt.

Verscheibungen aus Zusammensetzungen, enthaltend transparente thermoplastische Polymere wie z.B. Polycarbonat, bieten für den Einsatz im Fahrzeugbereich und für Gebäude aber viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Aufgrund der oben geschilderten Vorteile von Kunststoffen besteht daher der Bedarf an Materialien, die sowohl die guten physikalischen Eigenschaften von Thermoplasten als auch die hohe Farbstabilität entsprechend eingefärbter Gläser aufweisen.

Unter den transparenten thermoplastischen Kunststoffen sind zum Beispiel Polymere basierend auf Polycarbonat und Polymethylmethacrylat (PMMA) besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke und ist im Rahmen der vorliegenden Erfindung bevorzugt.

Um die Langlebigkeit von thermoplastischen Materialien zu verbessern, ist bekannt, diese mit UV-Schutz und/oder Kratzfestbeschichtungen zu versehen.

Wie oben beschrieben, ist die Anzahl von Farbstoffen, welche eine äußerst hohe Bewitterungsstabilität aufweisen, begrenzt. Es wurde überraschenderweise gefunden, dass spezielle Farbstoffe zwar gegen Bewitterung äußerst stabil sind, jedoch eine Farbverschiebung bei der Verarbeitung, also in einem Compoundier- Extrusions- oder Spritzgusssprozess, zeigen. Diese Farbverschiebung ist unerwünscht und verschlechtert die optischen Eigenschaften des jeweiligen Formkörpers erheblich. Überraschend war, dass sich die Verfärbung vor allem bei der Verarbeitung von Polycarbonat mit hohen Molmassen bzw. hohen Viskositäten z.T. in Kombination mit hohen Verabeitungstemperaturen deutlich bemerkbar macht. Bei niedrigen Viskositäten bzw. niedrigen Temperaturen ist dieser Effekt weniger stark ausgeprägt bzw. nicht bemerkbar. Da jedoch bei Verarbeitung der thermoplastischen Zusammensetzung das Material häufig einer hohen Temperaturbelastung in Extrudern oder Spritzgussmaschinen - hier vor allem in Heißkanälen - ausgesetzt ist, ist eine temperaturstabile Zusammensetzung nicht nur von Vorteil, sondern essentiell. Höher viskose Materialien und Materialien mit höherer Wärmeformstabilität bzw. höherer Glastemperatur erfordern höhere Verarbeitungstemperaturen, bei denen wie oben beschrieben die Gefahr der Farbverschiebung besteht bzw. steigt.

Es ist also wünschenswert, dass sich die Polycarbonatzusammensetzung unter den für Thermoplaste üblichen Temperaturen verarbeiten lässt, ohne daß sich bei der Verarbeitung die Farbe oder die sonstigen Eigenschaften, wie mechanischen Eigenschaften, deutlich verändern.

Es bestand daher die Aufgabe Polycarbonatzusammensetzungen enthaltend Farbmittel, beziehungsweise Farbmittelkombinationen in Kombination mit geeigneten Stabilisatoren bereitzustellen, die über eine hohe Bewitterungsstabilität und hohe Farbstabilität bei hoher Verarbeitungstemperatur, wie sie z.B. bei Polymeren mit hohen Molekulargewichten und hohen Viskositäten oder mit hohen Glastemperaturen auftreten, verfügen. Die Zusammensetzung soll sich darüber hinaus durch eine hervorragende Schmelzestabilität auszeichnen.

Eine weitere Aufgabe der vorliegenden Erfindung war es, ein Verfahren zur Herstellung von thermoplastischen Polymer-Zusammensetzungen enthaltend die erfindungsgemäßen organischen Farbmittel/Stabilisatorkombination bereitzustellen.

Ferner war es die Aufgabe der vorliegenden Erfindung, gefärbte thermoplastische Polymer-Zusammensetzungen enthaltend mindestens ein organisches Farbmittel und mindestens ein Stabilisator für die Herstellung von Mehrschichtartikeln, Form- und Fertigteilen zur Verfügung zu stellen.

Überraschenderweise konnte die Aufgabe durch die erfindungsgemäßen organischen Farbmittelkombinationen enthaltend spezielle Stabilisatoren sowie die erfindungsgemäßen thermoplastischen Polymer-Zusammensetzungen, hergestellt unter Verwendung der erfindungsgemäßen organischen Farbmittel/Stabilisatorkombination, gelöst werden.

Es zeigte sich, dass die üblicherweise zur Stabilisierung von Polycarbonat eingesetzten Phosphorbasierten Additive wie Phosphite oder phenolischer Antioxidantien sich als wenig bzw. unwirksam bezüglich der Verarbeitungsstabilisierung Langzeitstabilisierungder Farbstoffe erwiesen.

Der bekannte Stand der Technik gibt keine Hinweise darauf, wie sich Farbstoffe in einer Polycarbonatmatrix sowohl für die Verarbeitung als auch über die Gebrauchsdauer stabilisieren lassen.

Während nicht erfindungsgemäße Farbstoffe, die sowohl eine ähnliche Struktur als auch eine ähnliche Farbcharakteristik wie die erfindungsgemäß geeigneten Farbstoffen aufweisen, verarbeitungsstabil sind und hierbei keiner weiteren Stabilisierung bedürfen, stellte sich heraus, daß diese Farbmittel überraschenderweise nicht die hohen Anforderungen an die Bewitterungsstabilität erfüllen.

Farbstoffe mit hoher Lichtechtheit bzw. hoher Stabilität gegen Bewitterung sind z.B. in WO 2012/080398 beschrieben. Allerdings ist aus dieser Veröffentlichung nicht zu entnehmen, wie sich die entsprechenden eingefärbten Mischungen bei hohen Verarbeitungstemperaturen verhalten bzw. wie sich die Zusammensetzungen gegen Veränderungen durch thermische Belastung stabilisieren lassen.

EP 2 305 748 und WO 2009/100828 beschreiben Polycarbonatzusammensetzungen enthaltend Phoshine und/oder Phosphate als Stabilisatoren zur Verbesserung der physikalischen Eigenschaften der Zusammensetzung wie z.B. der Hydrolysestabilität. Spezielle Farbmittelzusammensetzungen werden ebensowenig beschrieben wie ihre Stabilisierung.

US 6,476,158 beschreibt gedeckte, d.h. nicht transparente Polycarbonat-Polyester Zusammensetzungen, welche eine besonders hohe Witterungsstabilität und Erhalt des Oberflächenglanzes aufweisen. Es werden allerdings weder transparente Einstellungen noch die Stabilisierung der Farbmittel gegen thermische Einflüsse beschrieben.

In der US 6,355,723 werden Hydroxy-funktionalisierte Anthrachinone in Polycarbonatzusammensetzungen geschrieben. wobei kein Hinweis auf die Stabilisierung dieser speziellen Farbstoffsysteme gegeben wird.

In EP 1 275 694 werden eine große Anzahl Farbmittel, darunter auch Hydroxy-funktionalisierte Anthrachinonsysteme zur Verwendung in Polycarbonat beschrieben, wobei kein Hinweis auf die Thermostabilität bzw. Bewitterunsgstabilität der Farbmittel gegeben wird.

Darüber hinaus wird auch eine Vielzahl von Stabilisatoren und spezielle Phosphate als Katalysatoren beschrieben, wobei keine Zusammenhang zwischen Farbstabilität, Farbstoff und Stabilisator offenbart wird.

In der US 20100255295 und in JP 2000191899 werden eine Vielzahl von Farbstoffen, darunter auch Anthrachinonsysteme genannt, wobei kein Hinweis auf eine hohe Bewitterungsstabilität spezifischer Farbmittel gegeben wird. Weiterhin werden eine Vielzahl von Stabilisatoren u.a. auch Phosphate genannt, ohne auf deren Eignung zur Stabilisierung der Farbmittel einzugehen.

In JP 07033969 werden Phosphonate und Phosphite zur Stabilisierung von Farbmittelmischungen beschrieben, die im Sinne der vorliegenden Erfindung als Vergleichsbeispiele dienen können.

JP 2009035691 A1 offenbart schwarz gefärbte Zusammensetzungen, enthaltend aromatisches Polycarbonat, ein oder mehrere Farbmittel, wobei als Farbmittel mindestens ein Anthrachinonfarbstoff enthalten ist, und einen alicyclischen Polyester. Es können außerdem spezielle Phosphate enthalten sein. Es ist nicht beschrieben, ob die Anthrachinonfarbstoffe freie OH-Gruppen aufweisen oder nicht.

EP 1857424 A1 beschreibt Zusammensetzungen, enthaltend ein Polyvinylacetalharz, ein Farbmittel, z.B. auch ein Anthrachinon, ein IR-blockendes Additiv und einen Phosphorsäureester, z.B. ein Trialkylphosphat. Auch hier wird nichts zu OH-Funktionen der Farbmittel gesagt.

Auch die WO 2011/038842 A1 beschreibt thermoplastische Zusammensetzungen, hier auf Basis von Polycarbonat, enthaltend Phosphorsäureester wie Alkylphosphate und ggf. Farbmittel. Zu den Farbmitteln finden sich keine weiteren Hinweise.

JP 52 147655 A beschreibt eine Polymerzusammensetzung, enthaltend Polycarbonat, Trimethylphosphat, Farbmittel und ein Pigment in einem spezifischen Mengenverhältnis. Die Zusammensetzung ist als farbstabil bei der Verarbeitung beschrieben. Es ist nicht beschrieben, ob die Farbmittel freie OH-Funktionen aufweisen oder nicht.

US 2012/157587 A1 beschreibt Zusammensetzungen, enthaltend ein transparentes thermoplastisches Polymer, mindestens einen anorganischen IR-Absorber, ggf. ein anorganisches Pigment sowie ein oder mehrere organische Farbmittel. Es sind konkrete Zusammensetzungen offenbart, die außerdem Triphenylphosphin als Thermostabilisator enthalten. Zwischen den einzelnen Farbmitteln wird hinsichtlich ihrer Auswirkungen auf die Bewitterungsstabilität nicht unterschieden. Es ist dem Dokument auch nicht zu entnehmen, dass die Farbmittel eine unterschiedliche Verarbeitungsstabilität zeigen.

Aus dem Stand der Technik ist nicht ersichtlich, welche Farbmittelsysteme sich in welcher Weise in einer Polycarbonatmatrix stabilisieren lassen. Aus dem Stand der Technik ist keine Lehre zu entnehmen, wie das hier geschilderte Problem zu lösen ist.

Erfindungsgemäße organische Farbmittel sind hierbei die nachfolgend unter b) dargestellten Strukturen, wobei in den erfindungsgemäßen gefärbten thermoplastischen Polymer-Zusammensetzungen mindestens ein organisches Farbmittel der unter b) offenbarten Strukturen enthalten ist. Bevorzugt enthält die Mischung weitere Farbmittel; dabei sind insbesondere die unter b) genannten Farbmittel bevorzugt.

Die erfindungsgemäße Zusammensetzung auf Basis einer thermoplastischen Polymerkomponente a) enthält:
b) mindestens einem Farbmittel auf Anthrachinonbasis, welches mindestens eine OH-Funktionalität trägt. Besonders bevorzugte Farbmittel auf Anthrachinonbasis mit mindestens einer OH-Funktion sind ausgewählt aus den folgenden Strukturen 1 und 2:

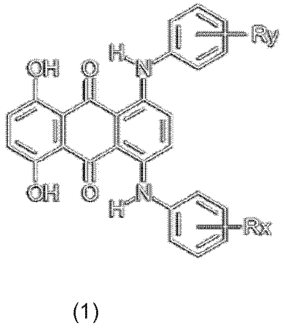

Dabei stehen Rx und Ry für einen verzweigte oder linearen Alkylrest. Insbesondere für einen linearen oder verzweigten C1 bis C12 Rest und besonders bevorzugt für Methyl, Ethyl, Propyl, n-Butyl, Isopropyl, Isobutyl, tert-Butyl, Pentyl, Hexyl, Heptyl, Octyl-Rest und ganz besonders bevorzugt für n-Butyl, tert-Butyl und Methyl. Derartige Farbmittel sind z.B. unter dem Handelsnamen Macrolex^{®} Grün G (z.B. CAS-Nr. 28198-05-2, 4851-50-7) bei der Firma Lanxess AG erhältlich.

Die Bezeichnung C(Zahl) (z.B. C1, C12) bedeutet in der vorliegenden Erfindung eine Kohlenstoffkette mit einer Kettenlänge, die der nachfolgenden (Zahl) entspricht, wobei auch Strukturisomere umfaßt sind.

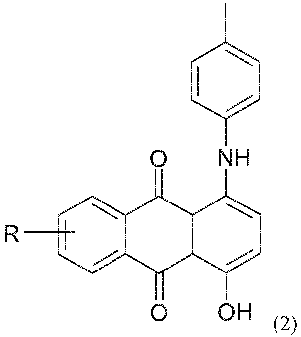

R ist ausgewählt aus der Gruppe, die aus H und p-Methylphenlyamin-Rest besteht; bevorzugt ist R = H.

Derartige Farbmittel sind z.B. unter dem Handelsnamen Macrolex^{®} Violet B (CAS 81-48-1) von der Firma Lanxess AG erhältlich.

b1) Optional einem oder mehrere weiteren Farbmittel, bevorzugt auf Anthrachinonbasis, Perinonbasis oder Phthalocyaninbasis, ausgewählt aus der Gruppe der Farbmittel gemäß den Strukturen (3) bis (8) 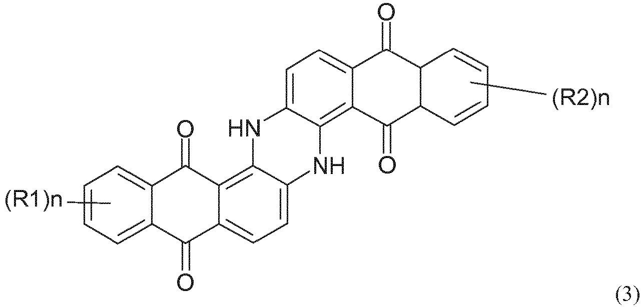 wobei
- R1 und R2 unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht für eine natürliche Zahl zwischen 0 und 4.

In einer besonders bevorzugten Ausführungsform ist in allen Ringen n=0, so daß alle R1 und R2 = H sind.

Farbmittel dieser Struktur (3) sind kommerziell erhältlich unter der Paliogen Blau Reihe der BASF AG.

Bei Verwendung von Farbmitteln der Struktur (3) sind insbesondere die Pigmente bevorzugt, die ein Schüttvolumen (bestimmt nach DIN ISO 787-11) von 2 l/kg - 10 l/kg, bevorzugt 3 l/kg - 8 l/kg, eine spezifische Oberfläche (bestimmt nach DIN 66132) von 5 m²/g - 60 m²/g, bevorzugt 10 m²/g - 55 m²/g, und einen pH-Wert (bestimmt nach DIN ISO 787-9) von 4 - 9 aufweisen. 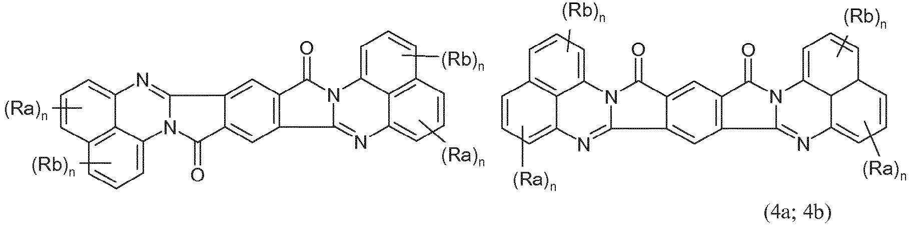 wobei
- Ra und Rb unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht unabhängig vom jeweiligen R für eine natürliche Zahl zwischen 0 und 3, wobei der Rest für n=0 Wasserstoff ist.

In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta Position zu den Kohlenstoffatomen, welche die Stickstofffunktionalitäten tragen, befinden.

In einer besonders bevorzugten Ausführungsform ist in allen Ringen n=0, so daß alle Ra und Rb = H sind. 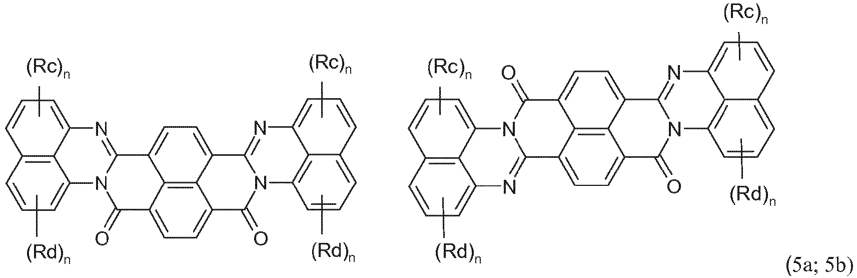 wobei
- Rc und Rd unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht unabhängig vom jeweiligen R für eine natürliche Zahl zwischen 0 und 3, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-butylrest dar, welcher sich bevorzugt in meta Position zu den Kohlenstoffatomen, welche die Stickstofffunktionalitäten tragen, befinden.

In einer besonders bevorzugten Ausführungsform ist in allen Ringen n=0, so daß alle Rc und Rd = H sind.

Die Strukturen (4a) und (4b) bzw. (5a) und (5b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-% ) von (4a) und (4b) bzw. (5a) und (5b) eingesetzt.

Die Herstellung derartiger Farbmittel ist z.B. in DE 2148101 oder WO 2009 074504 A1 beschrieben worden.

Bevorzugt enthält die erfindungsgemäße Zusammensetzung mindestens ein Farbmittel der Strukturen (4a), (4b), (5a) und (5b), wobei hiervon die Farbmittel der Strukturen (4a) und (4b) besonders bevorzugt sind.

In einer weiteren Ausführungsform werden die Strukturen (4a), (4b), (5a) und (5b) als jeweils reine Isomere eingesetzt, wobei die reinen Isomere beispielsweise durch präparative HPLC erhalten werden können. 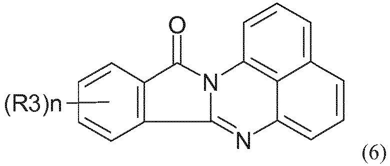 wobei R3 bevorzugt für Halogen, und insbesondere bevorzugt für Cl, steht, wobei besonders bevorzugt n=4 ist. Weiter bevorzugt ist eine Ausführungsform mit n=0, so daß R3 = H sind.

Derartige Farbmittel sind z.B. unter Macrolex^{®} Orange 3G oder Macrolex^{®} Rot EG bei der Firma Lanxess AG erhältlich.

Dabei kann, wenn R3 für Cl steht und n = 4 ist, statt dem Farbmittel der Struktur (6) das Farbmittel mit der Struktur (7) eingesetzt werden, um dieselben Farbeigenschaften zu erzielen:

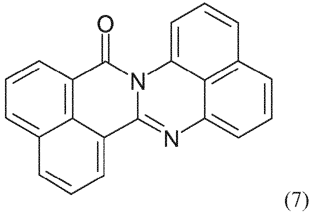

Derartige Farbmittel sind z.B. unter dem Handelsnamen Macrolex^{®} Rot E2G bei der Firma Lanxess AG erhältlich.

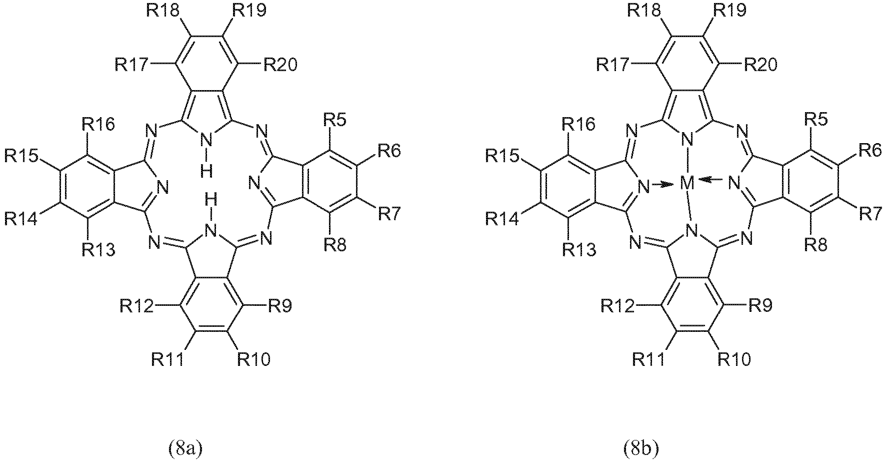

Die Reste R(5-20) sind jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R = C1 : Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (8b) mit M=Cu und R(5-20)=H als Heliogen^{®} Blau K 6911D oder Heliogen^{®} Blau K 7104 KW von der BASF AG, Ludwigshafen erhältlich.

Verbindungen der Struktur (8a) sind z.B. als Heliogen^{®} Blau L 7460 von der BASF AG, Ludwigshafen, erhältlich.

Die als Komponenten b) und b1) im Rahmen der vorliegenden Erfindung offenbarten organischen Farbmittel werden, bezogen auf die jeweilige Einzelkomponente, in Mengen von 0,000001 Gew.-% bis 1,000000 Gew.-%, bevorzugt von 0,00005 Gew.-% bis 0,50000 Gew.-% und besonders bevorzugt von 0,0001 Gew.-% bis 0,1000 Gew.-% in thermoplastischen Polymer-Zusammensetzungen verwendet.

In einer speziellen Ausführungsform für transparent eingefärbte thermoplastische Polymer-Zusammensetzungen werden die erfindungsgemäßen organischen Farbmittel bezogen auf die jeweilige Einzelkomponente in Mengen von 0,00001 Gew.-% bis 0,30000 Gew.-%, bevorzugt von 0,00005 Gew.-% bis 0,10000 Gew.-% und besonders bevorzugt von 0.00010 Gew.-% bis 0,05000 Gew.-% in den thermoplastischen Polymer-Zusammensetzungen verwendet.

Die Mengenangaben in Gew.-% beziehen sich hierbei auf eine resultierende Polymer-Zusammensetzung enthaltend die erfindungsgemäßen organischen Farbmittel oder organischen Farbmittelkombinationen.

In einer bevorzugten Ausführungsform enthalten die erfindungsgemäßen Farbmittelzusammensetzungen zwingend mindestens ein Farbmittel ausgewählt aus der Komponente b1).

Die erfindungsgemäßen thermoplastischen Polymer-Zusammensetzungen enthaltend die erfindungsgemäßen organischen Farbmittel oder organischen Farbmittelkombinationen basieren hierbei insbesondere bevorzugt auf Polycarbonat.
c)
mindestens einen Stabilisator oder Verarbeitungshilfsmittel auf Phosphatbasis. Das Phosphat hat dabei die folgende Struktur (9) 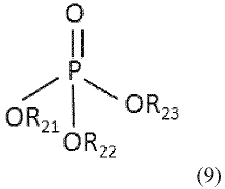 wobei R21 bis R23 H, gleiche oder unterschiedliche lineare, verzweigte oder zyklische Alkylreste sein können. Besonders bevorzugt sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäss geeignete Alkylphosphate sind z. B. Mono-, Di- und Trihexylphosphat, Triisoctylphosphat und Trinonylphosphat.

Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Die verwendeten Alkylphosphate werden in Mengen von weniger als 0,0500 Gew.-%, bevorzugt von 0,00005 Gew.-% bis 0,05000 Gew.-%, besonders bevorzugt 0,0002 bis 0,0500 Gew.-%, ganz besonders bevorzugt von 0,0005 Gew.-% bis 0,0300 Gew.-% und in einem sehr bevorzugtem Fall von 0,001 bis 0,0120 bezogen auf das Gesamtgewicht der Zusammensetzung eingesetzt.
d)
   optional 0,0 Gew.-% bis 1,0 Gew.-%, bevorzugt 0,01 Gew.-% bis 0,50 Gew.-%, besonders bevorzugt 0,01 Gew.-% bis 0,40 Gew.-% ein oder mehrere Entformer, bezogen auf das Gesamtgewicht der Zusammensetzung. Besonders geeignete Entformungsmittel für die erfindungsgemäße Zusammensetzung sind Pentaerythrittetrastearat (PETS) oder Glycerinmonostearat (GMS), bevorzugt PETS
e)
   optional 0,00 Gew% bis 20,00 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens eines UV(Ultraviolett)-Absorbers.

Geeignete UV-Absorber sind beispielsweise beschrieben in der EP 1 308 084 A1, in der DE 102007011069 A1 sowie in der DE 10311063 A1; Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF AG, Ludwigshafen), 2-(2'-Hydroxy-5'-(tert.-octyl)-phenyl)-benzotriazol (Tinuvin^{®} 329, BASF AG, Ludwigshafen), 2-(2'-Hydroxy-3'-(2-butyl)-5'-(tert.butyl)-phenyl)-benzotriazol (Tinuvin^{®} 350, BASF AG, Ludwigshafen), Bis-(3-(2H-benztriazolyl)-2-hydroxy-5-tert.-octyl)methan, (Tinuvin^{®} 360, BASF AG, Ludwigshafen), (2-(4,6-diphenyl-1,3,5-triazin-2-yl)-5-(hexyloxy)-phenol (Tinuvin^{®} 1577, BASF AG, Ludwigshafen), sowie der Benzophenone 2,4-Dihydroxy-benzophenon (Chimasorb^{®} 22 , BASF AG, Ludwigshafen) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (Tinuvin^{®} 1600, BASF AG, Ludwigshafen) oder Tetra-ethyl-2,2'-(1,4-phenylene-dimethylidene)-bismalonate (Hostavin^{®} B-Cap, Clariant AG). Es können auch Mischungen dieser Ultraviolett-Absorber eingesetzt werden
f)
optional 0,00 Gew.-%- 0,20 Gew.-%, bevorzugt 0,01 Gew.-% - 0,10 Gew.-%, weiter bevorzugt 0,01 Gew.-% bis 0,05 Gew.-%, besonders bevorzugt 0,015 Gew.-% bis 0,040 Gew.-% ein oder mehrere Thermo- bzw. Verarbeitungsstabilisatoren, verschieden von c), bezogen auf das Gewicht der Gesamtzusammensetzung, bevorzugt ausgewählt aus der Gruppe der Phosphine, Phosphite und phenolischen Antioxidantien sowie deren Mischungen.

Geeignete Stabilisatoren sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8, 10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin.

Insbesondere bevorzugt werden Triphenylphosphin (TPP), Irgafos^{®} 168 (Tris(2,4-di-tert-butylphenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit- 3-(4-hydroxy-3,5-di-tert-butylphenyl)propionat; CAS: 6683-19-8) und Irganox 1076^{®} (2,6-Di-tert-butyl-4-(octadecanoxycarbonylethyl)phenol) eingesetzt.

Komponente g) Die erfindungsgemäße Polycarbonatzusammensetzung kann optional 0,0 Gew.-% bis 5,0 Gew.-%, bevorzugt 0,01 Gew.-% bis 1,00 Gew.-% an weiteren Additiven enthalten. Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, Thermostabilisatoren, anorganischen Pigmente, Entformungsmittel oder Verarbeitungshilfsmittel.

Optional enthält die Zusammensetzung als Additiv ein nanoskaliges Pigment, bevorzugt Ruß. Der Ruß liegt bevorzugt fein dispergiert in der organischen Polymermatrix vor. Geeignete Ruße weisen vorzugsweise eine durchschnittliche Teilchengröße auf von weniger als 100 Nanometer (nm), weiter bevorzugt weniger als 75 nm , noch weiter bevorzugt weniger als 50 nm, und besonders bevorzugt weniger als 40 nm, wobei die durchschnittliche Teilchengröße vorzugsweise größer als 0,5 nm, weiter bevorzugt größer als 1 nm, und besonders bevozugt größer als 5 nm ist.

Im Sinne der Erfindung geeignete Ruße unterscheiden sich von sogenannten Leitrußen dadurch, daß sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS^{®}, als nass-verarbeitete Pellets unter den Namen ELFTEX^{®}, REGAL^{®} und CSX^{®}, und in einer flockigen Erscheinungsform unter MONARCH^{®}, ELFTEX^{®}, REGAL^{®} und MOGUL^{®} - alle erhältlich von Cabot Corporation.

In einer besonders bevorzugten Ausführungsform weisen die Ruß-Typen Partikelgrößen von 10 - 30 nm auf und haben vorzugsweise eine Oberfläche von 35- 138 m2 pro g (m2/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern.

Insbesondere bevorzugt sind Ruße, die unter dem Handelsnamen BLACK PEARLS^{®} (CAS-Nr. 1333-86-4) (Partikelgröße ca. 17 nm) gehandelt werden.

Der nanoskalige Ruß wird in der erfindungsgemäßen Zusammensetzung bevorzugt in Konzentrationen von 0,0005 Gew.-% - 0,035 Gew.-% eingesetzt.

Die bereits als Komponenten b) bis f) der vorliegenden Erfindung offenbarten Substanzen sind in diesem Zusammenhang ausdrücklich nicht Bestandteil der Komponente g).

Der Anteil des thermoplastischen Polymers der Komponente a) addiert sich zu den Anteilen der anderen Komponenten zu 100 Gew.-%.

In der vorliegenden Erfindung genannte bevorzugte Ausführungsformen können sowohl einzeln als auch in Kombination miteinander vorliegen.

In einer bevorzugten Ausführungsform besteht die Zusammensetzung aus den Komponenten a, c, d, e und f, in einer weiter bevorzugten Ausführungsform aus den Komponenten a - f und in einer besonders bevorzugten Ausfürungsform aus den Komponenten a - g.

Die Polymer-Komponente a) enthält:
einen thermoplastischen, vorzugsweise transparenten thermoplastischen Kunststoff, bevorzugt Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat, wobei der transparente thermoplastische Kunststoff in einer Menge zugegeben wird, daß diese mit allen übrigen Komponenten 100 Gew.-% ergibt.

Auch Mischungen von mehreren transparenten thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Eine weitere spezielle Ausführungsform enthält in diesem Zusammenhang eine Mischung aus Polycarbonat und PMMA mit weniger als 2,0%, vorzugsweise weniger als 1,0%, weiter bevorzugt weniger als 0,5%, wobei mindestens 0,01 % PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2% und besonders bevorzugt 0,1% bezogen auf die Menge Polycarbonat, wobei das PMMA bevorzugt ein Molgewicht <40.000 g/mol aufweist.

Eine alternative weitere spezielle Ausführungsform enthält eine Mischung aus PMMA und Polycarbonat mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 10.000 bis 50.000, vorzugsweise von 14.000 bis 40.000 und insbesondere von 16.000 bis 32.000, ermittelt durch Gelpermeationschromatographie mit Polycarbonateichung Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5) , EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

In einer bevorzugten Ausführungsform wird als thermoplastisches Polymer oder Copolymer oder Bestandteil einer Mischung von thermoplastischen Polymeren Polycarbonat oder Copolycarbonat auf Basis von 1,1-Bis-(4-hydroxyphenyl)-3.3.5-trimethylcyclohexan verwendet (APEC^{®} der Fa. Bayer MaterialScience, Leverkusen).

Die Viskosität des thermoplastischen Polymers ist vorzugsweise im Bereich eines MVR von 38 bis 4, weiter bevorzugt von 20 bis 6 und besonders bevorzugt von 14 bis 8.

Die erfindungsgemäßen thermoplastischen Polymer-Zusammensetzungen basierend auf der Polymer-Komponete können hierbei neben den erfindungsgemäßen organischen Farbmitteln oder organischen Farbmittelkombinationenen der Komponenten b) und b1) sowie die erfindungsgemäßen Stabilisator c) sowie Komponente d) , e) und f) optional noch die weitere Komponente g) enthalten. Hierzu zählen z.B. IR-Absorber:
Die erfindungsgemäße Polycarbonatzusammensetzung kann optional 0,000 Gew.-% bis 0,015 Gew.-%, bevorzugt 0,00150 Gew.-% bis 0,01500 Gew.-%, weiter bevorzugt 0,00180 Gew% bis 0,01100 Gew.-% und besonders bevorzugt 0,00200 Gew% bis 0,00900 Gew.-% mindestens eines organischen oder anorganischen IR Absorbers berechnet als Feststoffanteil an IR-Absorber in der Polymer-Gesamtzusammensetzung enthalten. In einer speziellen Ausführungsform werden die IR-Absorber in einer Menge von bevorzugt 0,00350 Gew.-% bis 0,00850 Gew.-% und insbesondere bevorzugt 0,00400 Gew.-% bis 0,00800 Gew.% berechnet als Feststoffanteil an IR-Absorber in der Polymer-Gesamtzusammensetzung eingesetzt. Feststoffanteil an IR-Absorber meint in diesem Zusammenhang den IR-Absorber als Reinstoff und nicht eine Suspension oder andere Zubereitung, enthaltend den Reinstoff.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart.

Von den in der zitierten Literatur genannten IR-Absorbern sind solche auf Borid- und Wolframatbasis sowie auf ITO und ATO basierende Absorber sowie Kombinationen daraus bevorzugt.

Die Zusammensetzung enthält optional 0 Gew.-% bis 50 Gew.-%, bevorzugt 0 Gew.-% bis 35 Gew.-%, weiter bevorzugt 0 Gew.-% bis 30 Gew.-%, besonders bevorzugt 10 Gew.-% bis 30 Gew% Füll- und Verstärkungsstoffe.

Füll- und Verstärkungsstoffe für Polymer-Zusammensetzungen sind beispielsweise beschrieben in der EP 1 624 012 A1, DE 3742881 A1, US 6860539 B2, US 20060105053 A1, DE 102006055479 A1, WO 2005030851 A1 sowie in der WO 2008122359 A1.

Die erfindungsgemäßen Zusammensetzungen sind unter den für Thermoplaste üblichen Verarbeitungstemperaturen, d.h. bei Temperaturen oberhalb von 300 °C, wie z.B. 350 °C verarbeitbar stabil, ohne daß sich bei der Verarbeitung die Farbe oder die Leistungsdaten deutlich verändern.

Die Herstellung der erfindungsgemäßen Polymer-Zusammensetzungen enthaltend die Komponenten a) bis h) erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren wie unter anderem als Masterbatch eingebracht werden.

Die Verwendung von Masterbatchen sowie von Pulvermischungen oder kompaktierten Vormischungen ist insbesondere zum Einbringen der Komponenten a) bis h) geeignet. Hierbei können wahlweise alle vorgenannten Komponenten vorgemischt werden. Alternativ sind aber auch Vormischungen von Farbmitteln aus b)und/oder b1) sowie beliebige andere Kombinationen möglich. In allen Fällen werden für eine bessere Dosierbarkeit bei der Herstellung der thermoplastischen Polymer-Zusammensetzungen die vorgenanten Komponenten-Vormischungen bevorzugt mit pulverförmiger Polymerkomponente so aufgefüllt, daß gut handhabbare Gesamtvolumina entstehen.

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten beziehungsweise Formkörper aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Erfindungsgemäß bevorzugte Erzeugnisse, Formkörper oder geformte Gegenstände sind Verscheibungen, beispielsweise Autofenster, Fenster von Schienen- und Luftfahrzeugen, Autosonnendächer, Sicherheitsscheiben, Bedachungen oder Gebäudeverglasungen, LEDs, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, , Ampellinsen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung.

Bei Verscheibungsmaterialien trägt der Artikel mindestens eine Kratzfest- und/oder Antireflexbeschichtung auf mindestens einer Seite.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission.

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

### Farbveränderung:

ΔE ist ein errechneter Wer für den empfundenen Farbabstand nach ASTM D 2244. Bei den vorliegenden Versuchen wurde Lichtart D 65/10° verwendet. Für die Berechnung des ΔE-Wertes wurde die Formel 7 in der ASTM D 2244 herangezogen.

Die Bestimmung der Viskosität als MVR erfolgt bei 300 °C und 1,2 kg Belastung gemäß ISO 1033.

### Materialien zur Herstellung der Probekörper:

Komponente b)
   - Als Anthrachinon-basiertes Farbmittel der Formel (1) wird Macrolex Grün G (Solvent Green 28; CAS 28198-05-2) bei der Firma Lanxess AG, Leverkusen mit R = t-butyl verwendet.
   - Als Anthrachinon-basiertes Farbmittel der Formel (2) wird Macrolex Violet B (Solvent Violet 13, CAS 81-48-1) mit R=H von der Firma Lanxess AG, Leverkusen, verwendet.
   - Als nicht-erfindungsgemäßes Anthrachinon-basiertes Farbmittel wird Macrolex Grün 5B (Solvent Green 3; CAS 128-80-3) von der Firma Lanxess AG, Leverkusen, verwendet.
   - Als nicht-erfindungsgemäßes Anthrachinon-basiertes Farbmittel wird Macrolex Violet 3R (Solvent Violet 36; CAS 61951-89-1) von der Firma Lanxess AG, Leverkusen, verwendet.
Komponente c)
   - Als erfindungsgemäßen Stabilisator auf Phosphatbasis wird Triisooctylphosphat (TOF; Tris-2-ethyl-hexyl-phosphat; CAS 78-42-2) verwendet;
   - Als nicht-erfindungsgemäßer Stabilisator wird Triphenylphosphin (TPP) (CAS 603-35-0) verwendet.
   - Als nicht-erfindungsgemäßer Stabilisator wird Irgafos PEP-Q (CAS 119345-01-6) verwendet.
   - Als nicht-erfindungsgemäßer Stabilisator wird Irganox B900 (Mischung aus Irgafos 168 (80%) und Irganox 1076 (20%); Irgafos 168 (Tris-(2,4-di-tert- butylphenyl)phosphit; CAS 31570-04-4) ; Irganox 1076 (Octadecyl-3-(3,5-di-tert-butyl-4-hydroxyphenyl)propionat;
   - Als nicht-erfindungsgemäßer Stabilisator wird Doverphos S 9228 (Bis(2,4-dicumylphenyl) pentaerythritol diphosphit (CAS 154862-43-8)) verwendet.

   Als Polymerkomponente wird lineares Bisphenol-A-Polycarbonat mit Endgruppen basierend auf Phenol mit einer Schmelze-Volumenrate (MVR) von 9,5 cm³/10 min, gemessen bei 300 °C und 1,2 kg Belastung gemäß ISO 1033 eingesetzt [PC-A]. Dieses Polycarbonat enthält keine Additve.
   Ferner wird als Polymerkomponente lineares Bisphenol-A-Polycarbonat mit Endgruppen basierend auf tert.-Butylphenol mit einer Schmelze-Volumenrate (MVR) von 17 cm³/10 min, gemessen bei 250 °C und 2,16 kg Belastung gemäß ISO 1033 eingesetzt. Dieses Polycarbonat enthält Entformungsmittel jedoch keinen Thermostabilisator (Makrolon OD 2015 der Firma Bayer Materialscience AG).

Herstellung der thermoplastischen Polymer-Zusammensetzungen und Herstellung der Spritzgusskörper:
Das Granulat wird bei 120 °C für 3 Stunden im Vakuum getrocknet.

Die Herstellung der Compounds und der Spritzgusskörper erfolgte auf einem Miniextruder und Mikro-Spritzgussmaschine der Firma DSM (DSM-Mini Extruder Midi 2000 und DSM Research Mikro Injection Moulding Machine, DSM; 6401 JH Heerlen (NL)); die Formkörper haben eine kreisförmige Geometrie (Rundplatte) und besitzen einen Durchmesser von 20 mm und eine Dicke von 1,6 mm. Die Temperatur bei der Extrusion ist weiter unten angegeben.

**Tabelle 1: Farbmittel-Zusammensetzungen (Mengen in Gew.-%); Basiszusammensetzung ohne Stabilisator**

| Einsatzstoff | Bsp. 1 | Bsp. 2 | Bsp. 3 | Bsp. 4 |
|---|---|---|---|---|
| PC-A | 99,99 | 99,99 | 99,99 | 99,99 |
| Macrolex Violett B | 0,01 | - | - | - |
| Macrolex Violett 3R | - | 0,01 | - | - |
| Macrolex Grün G | - | - | 0,01 | - |
| Macrolex Grün 5B | - | - | - | 0,01 |

Die Zusammensetzungen der Beispiele 1 bis 4 werden bei einer Temperatur von 300 °C und einer Verweilzeit von 5 Minuten mit oben beschriebenen Geräten zu kreisförmigen Spritzgusskörpern (s.o.) verarbeitet.

**Tabelle 2 : Farbmittel-Zusammensetzungen enthaltend verschiedene Stabilisatoren (Mengen in Gew.-%)**

| Einsatzstoff | Bsp. 5 | Bsp. 6 | Bsp. 7 | Bsp. 8 | Bsp. 9 | Bsp. 10 | Bsp. 11 | Bsp. 12 | Bsp. 13 | Bsp. 14 | Bsp. 15 | Bsp. 16 |
|---|---|---|---|---|---|---|---|---|---|---|---|---|
| PC A | 99,99 | 99,99 | 99,98 | 99,98 | 99,94 | 99,94 | 99,94 | 99,94 | 99,94 | 99,94 | 99,94 | 99,94 |
| Macrolex Violet B | 0,01 | - | 0,01 | - | 0,01 | - | 0,01 | - | 0,01 | - | 0,01 | - |
| Macrolex Grün G | - | 0,01 | - | 0,01 | - | 0,01 | - | 0,01 | - | 0,01 | - | 0,01 |
| TOF | - | - | 0,01 | 0,01 | - | - | - | - | - | - | - | - |
| Irganox B 900 | - | - | - | - | 0,05 | 0,05 | - | - | - | - | - | - |
| TPP | - | - | - | - | - | - | 0,05 | 0,05 | - | - | - | - |
| Irgafos PEP-Q | - | - | - | - | - | - | - | - | 0,05 | 0,05 | - | - |
| Doverphos S-9228 | - | - | - | - | - | - | - | - | - | - | 0,05 | 0,05 |

Die Farbmittelzusammensetzungen der Beispiele 5 bis 16 werden unter höherer Temperaturbelastung verspritzt, um die Farbstabilität zu einzelnen Zusammensetzungen zu überprüfen. Die Zusammensetzungen der Beispiele 5 bis 16 werden dabei bei einer Temperatur von 350 °C und einer Verweilzeit von 5 Minuten mit oben beschriebenen Geräten zu kreisförmigen Spritzgusskörpern verarbeitet. Die Ergebnisse (Farbmessungen) sind in Tabelle 4 bzw. 5 gezeigt.

**Tabelle 3: Farbmittel-Zusammensetzungen enthaltend verschiedene Stabilisatoren (Mengen in Gew.-%) (Vergleichs-Farbmittel)**

| Einsatzstoff | Bsp. 17 | Bsp. 18 |
|---|---|---|
| PC A | 99,99 | 99,99 |
| Macrolex Violet 3R | 0,01 | - |
| Macrolex Grün 5B | - | 0,01 |
| TOF | - | - |
| Irganox B 900 | - | - |
| TPP | - | - |
| Irgafos PEP-Q | - | - |
| Doverphos S-9228 | - | - |

Die Farbmittelzusammensetzungen der Beispiele 17 und 18 werden bei 350 °C und einer Verweilzeit der Schmelze von 5 min verspritzt.

Die Delta-E Werte werden dabei auf die Einstellung ohne Stabilisatoren bezogen, welche unter geringer Temperaturbelastung (300 °C) hergestellt wurde.

**Tabelle 4: Einstellungen mit Macrolex Grün G**

| | Bsp. 3 | Bsp. 6 | Bsp. 8 Erfindungsgem. | Bsp. 10 Vergl. | Bsp. 12 Vergl. | Bsp. 14 Vergl. | Bsp. 16 Vergl. |
|---|---|---|---|---|---|---|---|
| L* | 84,28 | 87,07 | 83,94 | 85,13 | 85,33 | 88,89 | 86,29 |
| a* | -27,06 | -5,85 | -25,65 | -15,10 | -11,72 | -12,10 | -12,06 |
| b* | 1,62 | 6,07 | 2,48 | 3,84 | 4,51 | 2,10 | 3,78 |
| Delta E | 0,0 | 21,85 | 1,69 | 12,19 | 15,65 | 15,66 | 15,29 |

Aus Beispiel 3 und Beispiel 6 welche keine Stabilisatoren enthalten, erkennt man die drastische Farbverschiebung bei höheren Verarbeitungstemperaturen (Beispiel 3 bei 300° C; Beispiel 6 bei 350° C).

Im Vergleich der Beispiele 3, 6 und 8 erkennt man, dass durch die erfindungsgemäße Polycarbonatzusammensetzung (Beispiel 8) die Farbverschiebung bei Verarbeitung fast vollständig verhindert werden kann. Die Vergleichsbeispiele 10, 12, 14, 16 belegen, dass Stabilisatoren, die herkömmlich für PC eingesetzt werden, keine oder nur sehr geringe Wirkung bei der Stabilisierung des Farbmittels zeigen.

**Tabelle 5: Einstellungen mit Macrolex Violet B**

| | Bsp. 1 | Bsp. 5 | Bsp. 7 Erfindungsgem. | Bsp. 9 Vergl. | Bsp. 11 Vergl. | Bsp. 13 Vergl. | Bsp. 15 Vergl. |
|---|---|---|---|---|---|---|---|
| L* | 73,98 | 80,29 | 73,88 | 70,90 | 82,14 | 72,63 | 79,96 |
| a* | 5,31 | 9,93 | 4,61 | 11,40 | 8,54 | 7,60 | 9,41 |
| b* | -28,02 | -12,62 | -26,61 | -25,18 | -11,73 | -26,31 | -15,39 |
| Delta E | 0,0 | 17,27 | 1,58 | 7,39 | 18,50 | 3,16 | 14,56 |

Aus Beispiel 1 (bei 300 °C verarbeitet) und Beispiel 5 (bei 350 °C verarbeitet) welche keine Stabilisatoren enthalten, geht hervor, dass es bei höheren Verarbeitungstemperaturen zu drastischen Farbverschiebungen kommt. Die erfindungsgemäße Zusammensetzung Beispiel 7 belegt, dass sich die Farbverschiebung signifikant reduzieren lässt. Dagegen sind die für Polycarbonat herkömmlich eingesetzten Stabilisatoren nicht oder deutlich weniger wirksam im Vergleich zur erfindungsgemäßen Zusammensetzung.

Einstellung mit Vergleichs-Farbmittel Macrolex Grün 5B

**Tabelle 6**

| | Bsp. 4 | Bsp. 18 |
|---|---|---|
| L* | 78,38 | 77,66 |
| a* | -25,15 | -24,80 |
| b* | -11,88 | -9,71 |
| Delta E | 0,0 | 2,31 |

**Tabelle 7**

| | Bsp. 2 | Bsp. 17 |
|---|---|---|
| L* | 79,58 | 78,50 |
| a* | 13,39 | 13,73 |
| b* | -16,95 | -17,16 |
| Delta E | 0,0 | 1,15 |

Es zeigt sich überraschenderweise, dass die Farbmittel Macrolex Grün 5B und Macrolex Violet 3R, obwohl strukturell ähnlich zu den oben genannten erfindungsgemäßen Farbmitteln (ebenfalls Anthrachionon-basiert), eine deutlich höhere Thermostabilität aufweisen. Eine Stabilisierung ist bei diesen Farbmitteln aus diesem Grund nicht nötig.

Der Einsatz der thermostabilen Farbmittel Macrolex Grün 5B und Macrolex Violet 3R ist allerdings aufgrund der mangelnden Witterungsstabilität in entsprechenden Anwendungen mit hohen Anforderungen hinsichtlich Farbstabilität (Lichtechtheit; Bewitterung) nicht möglich. Es war überraschend, dass im Gegensatz die strukturell ähnlichen Farbmittel Macrolex Violet B und Macrolex Grün G eine hohe Bewitterungsstabilität aufweisen.

Mit den erfindungsgemäßen Zusammensetzungen kann also sowohl das Ziel einer hohen Verarbeitungsstabilität als auch das Ziel einer hohen Bewitterungsstabilität erreicht werden.

## Patentansprüche

1. Polymerzusammensetzung mit verbesserter Farbstabilität enthaltend:
a) thermoplastisches Polymer in einem Anteil, daß dieser mit den übrigen Komponenten 100 Gew.-% ergibt,
b) Mindestens ein Farbmittel auf Anthrachinonbasis mit mindestens einer freien Hydroxylfunktion in einem Anteil von 0,000001 Gew.-% bis 1,000000 Gew.-%,
c) Mindestens einem Stabilisator auf Phosphatbasis mit folgender Struktur (9) 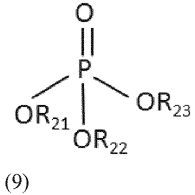
wobei R21 bis R23 H, gleiche oder unterschiedliche linerare, verzweigte oder zyklische Alkylreste sind,
wobei c) in einem Anteil von 0,00005 bis 0,05000 Gew.% vorliegt.

2. Zusammensetzung nach Anspruch 1, **dadurch gekennzeichnet, daß** sie folgende Komponenten d) - h) umfaßt:
d) 0,0 Gew.-% bis 1,0 Gew.-% ein oder mehrere Entformer, bezogen auf das Gesamtgewicht der Zusammensetzung,
e) 0,0 Gew% bis 20,00 Gew.-% ein oder mehrere UV-Absorber bezogen auf das Gesamtgewicht der Zusammensetzung,
f) 0,00 Gew.-% bis 0,20 Gew.-% ein oder mehrere Thermo- bzw. Verarbeitungsstabilisatoren verschieden von c) bezogen das Gesamtgewicht der Zusammensetzung.
g) 0,0 Gew.-% bis 5,0 Gew.-% ein oder mehrere weitere Additive bezogen auf das Gesamtgewicht der Zusammensetzung,

3. Zusammensetzung nach Anspruch 1 oder 2, dadurch gekennezeichnet, daß sie Komponenten b) - h) jeweils bezogen auf das Gesamtgewicht der Zusammensetzung umfaßt in Anteilen von:
b) Mindestens ein Farbmittel auf Anthrachinonbasis mit mindestens einer freien Hydroxylfunktion in einem Anteil von 0,00005 Gew.-% bis 0,50000 Gew.-%,
c) Mindestens einem Stabilisator auf Phosphatbasis in einem Anteil von 0,0002 Gew.-% bis 0,0500 Gew.-%,
d) 0,01 Gew.-% bis 0,50 Gew.-% ein oder mehrere Entformer, bezogen auf das Gesamtgewicht der Zusammensetzung,
e) 0,05 Gew% bis 10,00 Gew.-% ein oder mehrere UV-Absorber bezogen auf das Gesamtgewicht der Zusammensetzung,
f) 0,01 Gew.-% bis 0,05 Gew.-% ein oder mehrere Thermo- bzw. Verarbeitungsstabilisatoren verschieden von c) bezogen das Gesamtgewicht der Zusammensetzung.
g) 0,01 Gew.-% bis 1,00 Gew.-% ein oder mehrere weitere Additive bezogen auf das Gesamtgewicht der Zusammensetzung.

4. Zusammensetzung nach einem der vorhergehenden Ansprüche, **dadurch gekennzeichnet, daß** das thermoplastische Polymer ein Polycarbonat ist.

5. Zusammensetzung nach eine der vorhergehenden Ansprüche, **dadurch gekennzeichnet, daß** die Farbmittel ausgewählt sind aus der Gruppe bestehend aus den folgenden Strukturen: 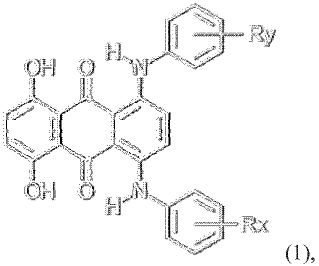
wobei Rx und Ry für einen verzweigte oder linearen Aklyrest stehen, 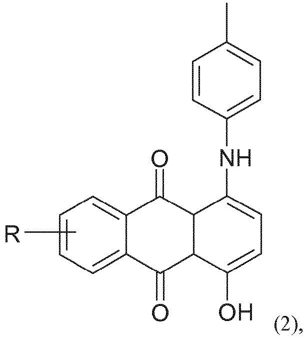
wobei R ausgewählt aus der Gruppe ist, die aus H und p-Methylphenlyamin-Rest besteht,

6. Zusammensetzung nach Anspruch 5, wobei Rx und Ry in Formel 1 für n-Butyl, tert.-Butyl und Methyl, und R in Formel 2 für H stehen.

7. Zusammensetzung nach einem der vorhergehenden Ansprüche, **dadurch gekennzeichnet, daß** Komponente c) ausgewählt ist aus der Gruppe, die Mono-, Di- und Trihexylphosphat, Triisooctylphosphat und Trinonylphosphat umfaßt.

8. Zusammensetzung nach einem der vorhergehenden Ansprüche, **dadurch gekennzeichnet, daß** Komponente c) Triisoctylphosphat ist.

9. Zusammensetzung nach einem der vorhergehenden Ansprüche, **dadurch gekennzeichnet, daß** die Zusammensetzung mindestens ein weiteres Farbmittel der Komponente b1) umfaßt, ausgewählt aus der Gruppe der Farbmittel auf Anthrachinonbasis, Perinonbasis und Phthalocyaninbasis.

10. Zusammensetzung nach einem der vorhergehenden Ansprüche, **dadurch gekennzeichnet, daß** die Zusammensetzung ein weiteres Farbmittel der Komponente b1) umfaßt, ausgewählt aus der Gruppe, die die Strukturen (3) bis (8) umfaßt: 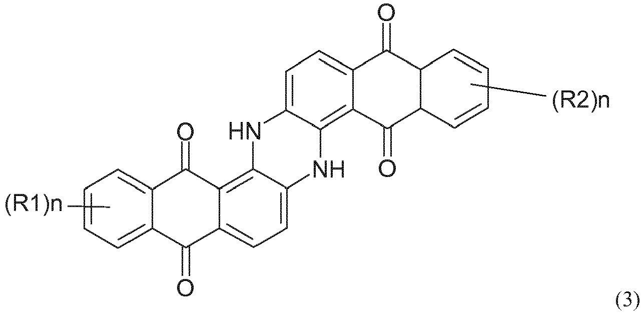 wobei
- R1 und R2 unabhängig voneinander für einen linearen oder verzweigten Alkylrest, oder Halogen steht,
- n steht für eine natürliche Zahl zwischen 0 und 4 ist, 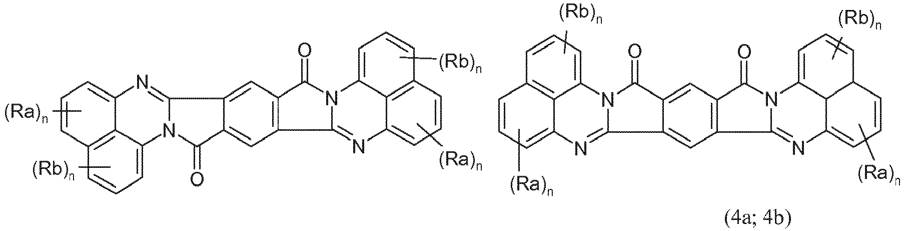
wobei
- Ra und Rb unabhängig voneinander für einen linearen oder verzweigten Alkylrest, oder Halogen steht,
- n steht unabhängig vom jeweiligen R für eine natürliche Zahl zwischen 0 und 3, wobei der Rest für n=0 Wasserstoff ist, 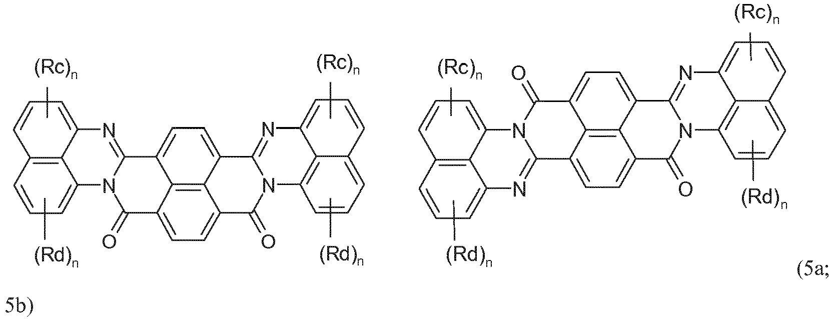
wobei
- Rc und Rd unabhängig voneinander für einen linearen oder verzweigten Alkylrest, oder Halogen steht,
- n steht unabhängig vom jeweiligen R für eine natürliche Zahl zwischen 0 und 3, wobei der Rest für n=0 Wasserstoff ist, 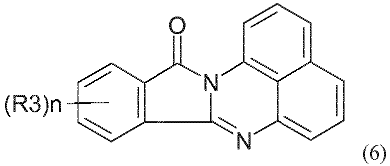 wobei R3 bevorzugt für Halogen und H steht, 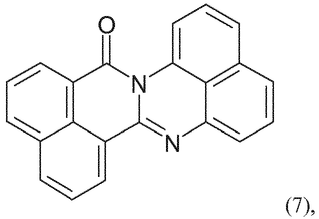 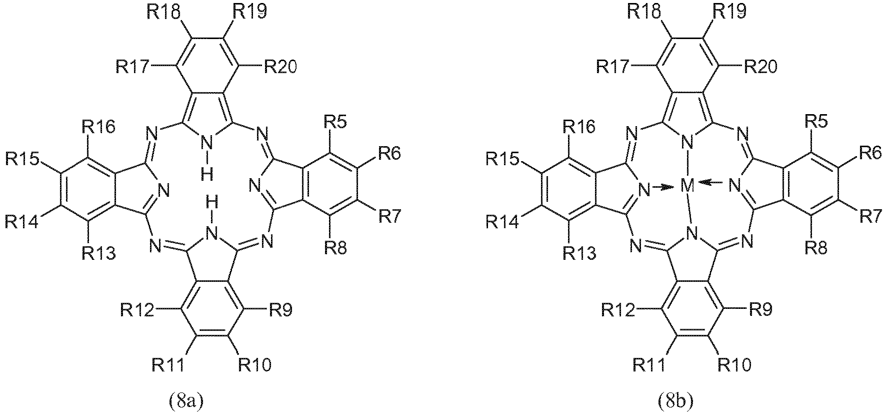 wobei die Reste R(5-20) jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN sind.

11. Verwendung von TOF zur Stabilisierung von Farbmitteln auf Anthrachinonbasis mit mindestens einer freien Hydroxylfunktion bei der Compoundierung von Polycarbonatzusammensetzungen nach einem der Ansprüche 4 bis 10.

12. Formteil hergestellt mit einer der Zusammensetzungen nach einem der Ansprüche 1 -10.

13. Formteil nach Anspruch 12, **dadurch gekennzeichnet, daß** es eine Automobilverscheibung ist.

14. Mehrschichterzeugnis umfassend:
a) eine Substratschicht bestehend aus einer Zusammensetzung nach einem der Anspüche 1 - 10,
b) mindestens einer Deckschicht als Kratzfestschicht.

15. Mehrschichterzeugnis nach Anspruch 14, **dadurch gekennzeichnet, daß** die Schicht b) zusätzlich eine UV-Schutzschicht aufweist.

## Claims

1. Polymer composition having improved color stability and comprising:
a) thermoplastic polymer in a proportion which together with the other components adds up to 100% by weight,
b) at least one colorant based on anthraquinone and having at least one free hydroxyl function in a proportion of from 0.000001% by weight to 1.000000% by weight,
c) at least one stabilizer based on phosphate and having the following structure (9) 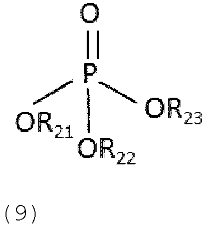
where R21 to R23 are H or identical or different linear, branched or cyclic alkyl radicals,
where c) is present in a proportion of from 0.00005 to 0.05000% by weight.

2. Composition according to Claim 1, **characterized in that** it comprises the following components d) - h):
d) from 0.0% by weight to 1.0% by weight of one or more mold release agents, based on the total weight of the composition,
e) from 0.0% by weight to 20.00% by weight of one or more UV absorbers, based on the total weight of the composition,
f) from 0.00% by weight to 0.20% by weight of one or more thermal or processing stabilizers different from c), based on the total weight of the composition,
g) from 0.0% by weight to 5.0% by weight of one or more further additives, based on the total weight of the composition.

3. Composition according to Claim 1 or 2, **characterized in that** it comprises components b) - h) in each case based on the total weight of the composition, in proportions of:
b) at least one colorant based on anthraquinone and having at least one free hydroxyl function in a proportion of from 0.00005% by weight to 0.50000% by weight,
c) at least one stabilizer based on phosphate in a proportion of from 0.0002% by weight to 0.0500% by weight,
d) from 0.01% by weight to 0.50% by weight of one or more mold release agents, based on the total weight of the composition,
e) from 0.05% by weight to 10.00% by weight of one or more UV absorbers, based on the total weight of the composition,
f) from 0.01% by weight to 0.05% by weight of one or more thermal or processing stabilizers different from c), based on the total weight of the composition,
g) from 0.01% by weight to 1.00% by weight of one or more further additives, based on the total weight of the composition.

4. Composition according to any of the preceding claims, **characterized in that** the thermoplastic polymer is a polycarbonate.

5. Composition according to any of the preceding claims, **characterized in that** the colorants are selected from the group consisting of the following structures: 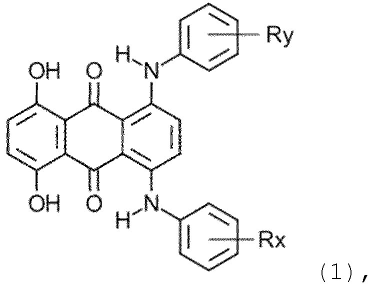
where Rx and Ry are each a branched or linear alkyl radical, 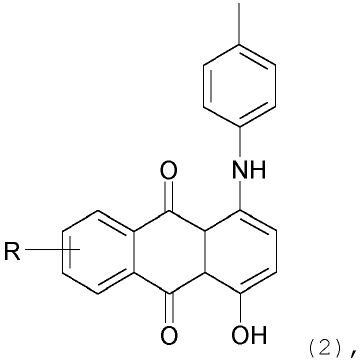
where R is selected from the group consisting of H and the p-methylphenylamine radical.

6. Composition according to Claim 5, wherein Rx and Ry in the formula 1 are n-butyl, tert-butyl and methyl, and R in the formula 2 is H.

7. Composition according to any of the preceding claims, **characterized in that** component c) is selected from the group consisting of monohexyl, dihexyl and trihexyl phosphate, triisooctyl phosphate and trinonyl phosphate.

8. Composition according to any of the preceding claims, **characterized in that** component c) is triisoctyl phosphate.

9. Composition according to any of the preceding claims, **characterized in that** the composition comprises at least one further colorant of the component b1) selected from the group of colorants based on anthraquinone, based on perinone and based on phthalocyanine.

10. Composition according to any of the preceding claims, **characterized in that** the composition comprises a further colorant of the component b1) selected from the group consisting of the structures (3) to (8): 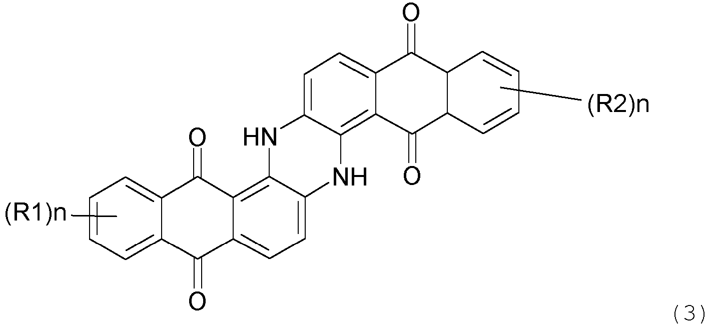 where
- R1 and R2 are each, independently of one another, a linear or branched alkyl radical or halogen,
- n is a natural number in the range from 0 to 4, 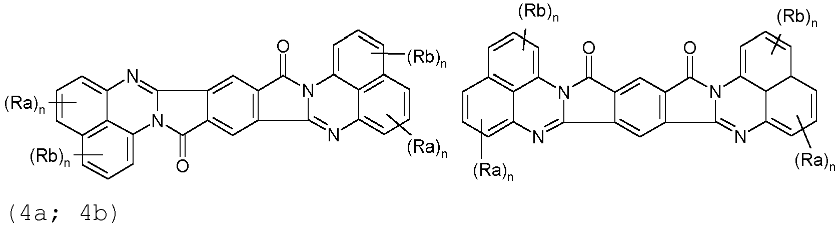
where
- Ra and Rb are each, independently of one another, a linear or branched alkyl radical or halogen,
- n is, independently of the respective R, a natural number in the range from 0 to 3, where the radical for n = 0 is hydrogen, 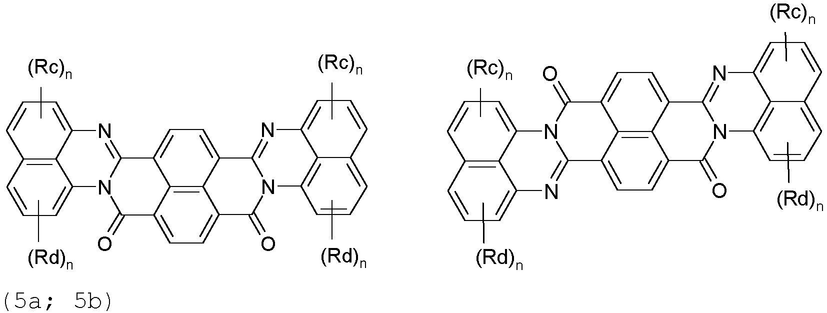
where
- Rc and Rd are each, independently of one another, a linear or branched alkyl radical or halogen,
- n is, independently of the respective R, a natural number in the range from 0 to 3, where the radical for n = 0 is hydrogen, 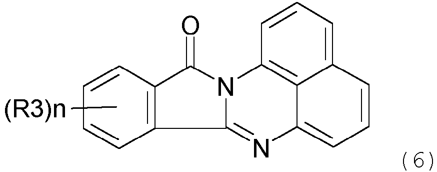
where R3 is preferably halogen and H, 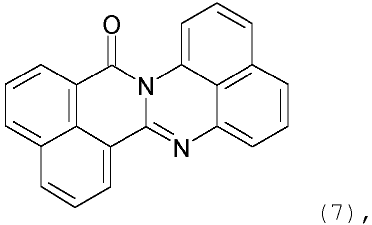 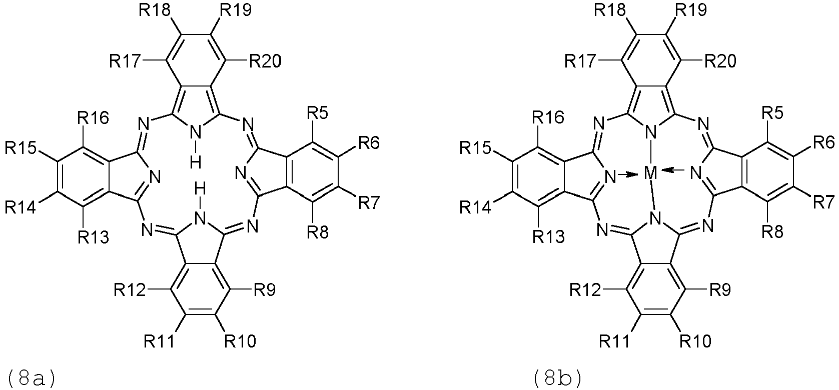
where the radicals R(5-20) are each, independently of one another, hydrogen, methyl, ethyl, propyl, isopropyl, butyl, isobutyl, tert-butyl, pentyl, neopentyl, hexyl, thexyl, fluorine, chlorine, bromine, sulfone, CN.

11. Use of TOF for stabilizing colorants based on anthraquinone and having at least one free hydroxyl function in the compounding of polycarbonate compositions according to any of Claims 4 to 10.

12. Molding produced using one of the compositions according to any of Claims 1-10.

13. Molding according to Claim 12, **characterized in that** it is an automobile window.

14. Multilayer product comprising:
a) a substrate layer consisting of a composition according to any of Claims 1-10,
b) at least one covering layer as antiscratch layer.

15. Multilayer product according to Claim 14, **characterized in that** the layer b) additionally comprises a UV protection layer.

## Revendications

1. Composition polymère à stabilité de couleur améliorée contenant :
a) un polymère thermoplastique en une quantité telle que celui-ci, ajouté aux autres composants, donne 100 % en poids,
b) au moins un colorant à base d'anthraquinone comportant au moins une fonction hydroxyle libre en une quantité allant de 0,000001 % en poids à 1,000000 % en poids,
c) au moins un stabilisant à base de phosphate comportant la structure (9) suivante 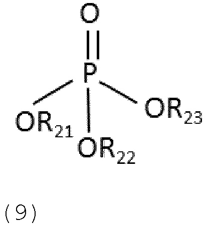 dans laquelle R21 à R23 représentent H, des radicaux alkyle linéaires, ramifiés ou cycliques identiques ou différents,
c) étant présent en une quantité allant de 0,00005 à 0,05000 % en poids.

2. Composition selon la revendication 1, **caractérisée en ce qu'**elle comprend les composants d) à h) suivants :
d) 0,0 % en poids à 1,0 % en poids d'un ou de plusieurs agents de démoulage, par rapport au poids total de la composition,
e) 0,0 % en poids à 20,00 % en poids d'un ou plusieurs absorbeurs d'UV, par rapport au poids total de la composition,
f) 0,00 % en poids à 0,20 % en poids d'un ou plusieurs stabilisants thermiques ou de traitement différents de c), par rapport au poids total de la composition,
g) 0,0 % en poids à 5,0 % en poids d'un ou de plusieurs autres additifs par rapport au poids total de la composition,

3. Composition selon la revendication 1 ou 2, **caractérisée en ce qu'**elle comprend les composants b) à h) respectivement par rapport au poids total de la composition, en des quantités de :
b) au moins un colorant à base d'anthraquinone comportant au moins une fonction hydroxyle libre en une quantité allant de 0,00005 % en poids à 0,50000 % en poids,
c) au moins un stabilisant à base de phosphate en une quantité allant de 0,0002 % en poids à 0,0500 % en poids,
d) 0,01 % en poids à 0,50 % en poids d'un ou de plusieurs agents de démoulage, par rapport au poids total de la composition,
e) 0,05 % en poids à 10,00 % en poids d'un ou plusieurs absorbeurs d'UV, par rapport au poids total de la composition,
f) 0,01 % en poids à 0,05 % en poids d'un ou plusieurs stabilisants thermiques ou de traitement différents de c), par rapport au poids total de la composition,
g) 0,01 % en poids à 1,00 % en poids d'un ou de plusieurs autres additifs par rapport au poids total de la composition,

4. Composition selon l'une quelconque des revendications précédentes, **caractérisée en ce que** le polymère thermoplastique est un polycarbonate.

5. Composition selon l'une quelconque des revendications précédentes, **caractérisée en ce que** les colorants sont choisis dans le groupe constitué des structures suivantes : 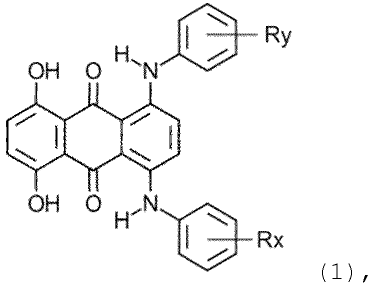
dans laquelle Rx et Ry représentent un radical alkyle linéaire ou ramifié, 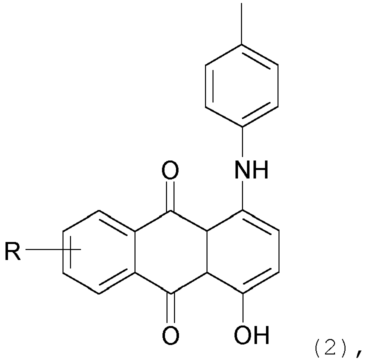
dans laquelle R est choisi dans le groupe qui est constitué de H et d'un radical p-méthylphénylamine,

6. Composition selon la revendication 5, dans laquelle Rx et Ry dans la formule 1 représentent n-butyle, tert-butyle et méthyle, et R dans la formule 2 représente H.

7. Composition selon l'une quelconque des revendications précédentes, **caractérisée en ce que** le composant c) est choisi dans le groupe qui comprend le phosphate de mono-, di- et trihexyle, le phosphate de triisooctyle et le phosphate de trinonyle.

8. Composition selon l'une quelconque des revendications précédentes, **caractérisée en ce que** le composant c) est le phosphate de triisooctyle.

9. Composition selon l'une quelconque des revendications précédentes, **caractérisée en ce que** la composition comprend au moins un autre colorant du composant b1), choisi dans le groupe des colorants à base d'anthraquinone, à base de périnone et à base de phtalocyanine.

10. Composition selon l'une quelconque des revendications précédentes, **caractérisée en ce que** la composition comprend un autre colorant du composant b1), choisi dans le groupe qui comprend les structures (3) à (8) : 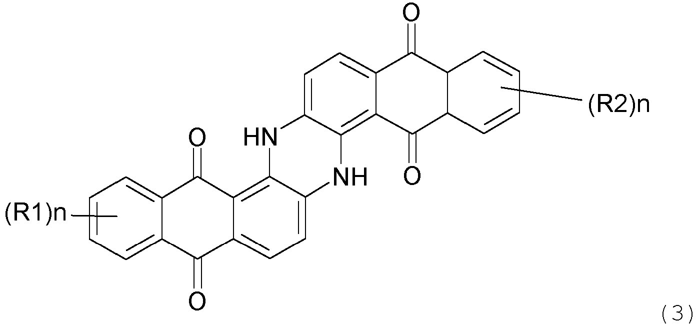 dans laquelle
- R1 et R2 représentent indépendamment l'un de l'autre un radical alkyle linéaire ou ramifié ou un atome d'halogène,
- n représente un nombre naturel compris entre 0 et 4, 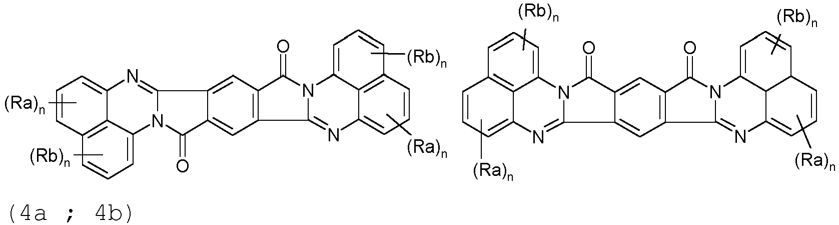
dans laquelle
- Ra et Rb représentent indépendamment l'un de l'autre un radical alkyle linéaire ou ramifié ou un atome d'halogène,
- n représente indépendamment du R respectif un nombre naturel compris entre 0 et 3, , le radical pour n=0 étant l'hydrogène, 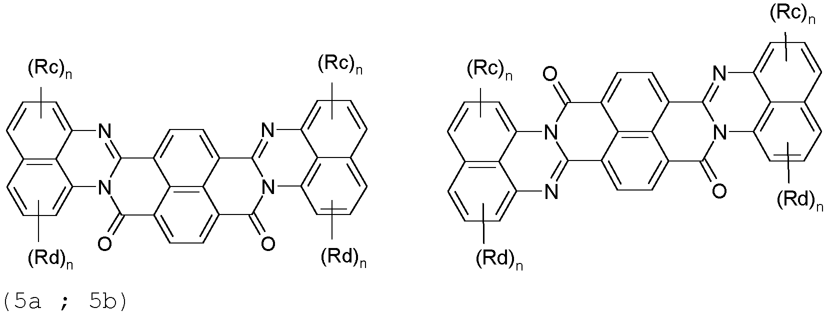
dans laquelle
- Rc et Rd représentent indépendamment l'un de l'autre un radical alkyle linéaire ou ramifié ou un atome d'halogène,
- n représente indépendamment du R respectif un nombre naturel compris entre 0 et 3, le radical pour n=0 étant l'hydrogène, 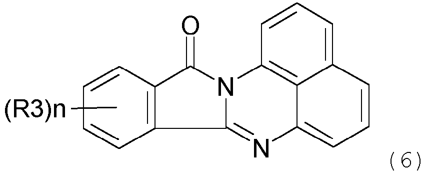
dans laquelle R3 représente préférablement un atome d'halogène et H, 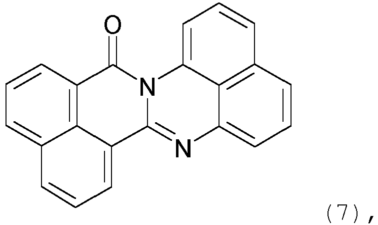 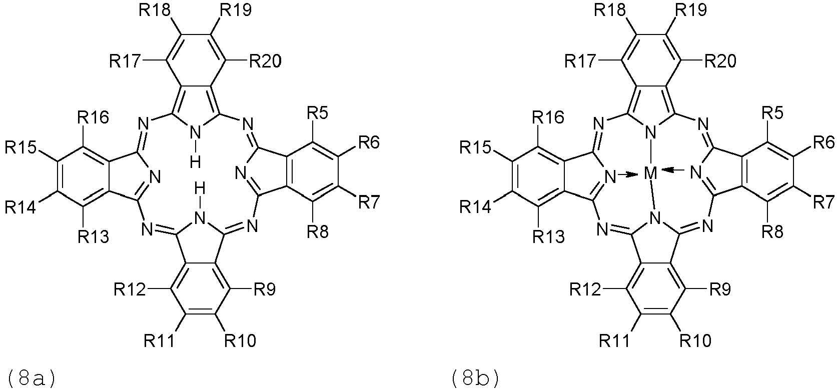
dans lesquelles les radicaux R(5-20) représentent chacun indépendamment les uns des autres l'hydrogène, un groupe méthyle, éthyle, propyle, isopropyle, butyle, isobutyle, tert-butyle, pentyle, néopentyle, hexyle, thexyle, le fluor, le chlore, le brome, sulfonyle, CN.

11. Utilisation de TOF pour stabiliser les colorants à base d'anthraquinone comportant au moins une fonction hydroxyle libre lors de la préparation de compositions de polycarbonate selon l'une quelconque des revendications 4 à 10.

12. Pièce moulée fabriquée avec l'une des compositions selon l'une quelconque des revendications 1 à 10.

13. Pièce moulée selon la revendication 12, **caractérisée en ce qu'**il s'agit d'un vitrage automobile.

14. Produit multicouche comprenant :
a) une couche substrat constituée d'une composition selon l'une quelconque des revendications 1 à 10,
b) au moins une couche de revêtement en tant que couche résistante aux rayures.

15. Produit multicouche selon la revendication 14, **caractérisé en ce que** la couche b) présente en outre une couche de protection contre les UV.
